# EUROPÄISCHE PATENTSCHRIFT

(11) **EP 2 965 395 B1**
(45) Veröffentlichungstag und Bekanntmachung des Hinweises auf die Patenterteilung: **03.05.2017**
(21) Anmeldenummer: 14705106.4
(22) Anmeldetag: 13.02.2014
(51) Int. Cl.: H02H 9/04

(54) **ÜBERSPANNUNGSSCHUTZEINRICHTUNG MIT KURZSCHLUSSFUNKTION ZUM ANLAGEN- UND PERSONENSCHUTZ**
OVERVOLTAGE PROTECTION DEVICE WITH SHORT-CIRCUIT FUNCTION FOR PROTECTING INSTALLATIONS AND PERSONS
DISPOSITIF DE PROTECTION CONTRE UNE SURTENSION À FONCTION COURT-CIRCUIT DESTINÉ À PROTÉGER DES INSTALLATIONS ET DES PERSONNES

(30) Priorität: 07.03.2013 DE 202013002222 U
(43) Veröffentlichungstag der Anmeldung: 13.01.2016
(73) Patentinhaber: Dehn + Söhne GmbH + Co. KG, 92318 Neumarkt/Opf. (DE)
(72) Erfinder: EHRLER, Jens, 92318 Neumarkt (DE); EHRHARDT, Arnd, 92318 Neumarkt (DE); BUEHLER, Klaus, 90542 Eckental (DE)
(74) Vertreter: Kruspig, Volkmar
(86) Internationale Anmeldenummer: PCT/EP2014/052805
(87) Internationale Veröffentlichungsnummer: WO 2014/135351

(56) Entgegenhaltungen:
- DE-A1-102007 024 622
- DE-A1-102008 013 447
- DE-C1- 19 545 505

## Beschreibung

Die Erfindung betrifft eine Überspannungsschutzeinrichtung mit Kurzschlussfunktion zum Anlagen- und Personenschutz für Niederspannungsanlagen, wobei in einem gemeinsamen Gehäuse sowohl mindestens ein Überspannungsschutzelement als auch eine thermisch auslösbare Kurzschließereinrichtung angeordnet ist, gemäß Oberbegriff des Anspruchs 1.

In industriellen Anlagen werden häufig Komponenten verschiedener Hersteller miteinander kombiniert und für einen störungsfreien Betrieb unter Normalbedingungen abgestimmt. Bezüglich des Überspannungsschutzes besitzen viele Spannungsversorgungen, Betriebsmittel und Steuerungen interne speziell angepasste Schutzmaßnahmen.

Die Maßnahmen betreffen den Schutz bei betriebsbedingten, temporären und transienten Überspannungen. Durch den Einsatz beispielsweise von getakteten Halbleitern werden betriebsbedingte hohe Schaltüberspannungen erzeugt, welche im Allgemeinen bereits interne oder externe Überspannungseinrichtungen erfordern. Bei komplexen Anlagen sind diese spezifischen Maßnahmen nur schwer abstimmbar, so dass es gegebenenfalls zu ungewollten Störungen aufgrund von gegenseitigen Beeinflussungen, z.B. durch Überschneidung der Arbeitsbereiche kommen kann.

In elektrischen Anlagen in denen der Anlagen- und Personenschutz eng mit einander verknüpft ist, gewinnt die Abstimmung der einzelnen Schutzmaßnahmen jedoch an Bedeutung. Sowohl die Vermeidung als auch die gezielte und sichere Beseitigung von Störungen ist für solche Anlagen daher zwingend erforderlich.

Erhöhte Anforderungen an die Sicherheit und Wirksamkeit dieser Maßnahmen sind insbesondere bei solchen Anlagen gegeben, bei welchen selbst nach der Abschaltung der Versorgungsspannung noch Gefährdungen für Personen z.B. bei der Behebung der Störung auftreten können.

Dies können u.a. Anlagen mit elektrischen, chemischen oder mechanischen Energiespeichern mit Netzpuffern, Notaggregaten oder mehrfacher Einspeisung sein. Beispielsweise können rotierende Maschinen bei Störungen vom Motorbetrieb in den Generatorbetrieb wechseln und über längere Zeiträume bis zum Stillstand erhebliche Spannungen und Energien liefern. Diese im Fehlerfall, also im Generatorbetrieb erzeugten Spannungen, können je nach Steuerung der Maschine sogar deutlich höher als die eigentliche Betriebsspannung liegen.

Zum Schutz dieser Anlagen wird häufig eine Schutzeinrichtung vorgesehen, welche bei Erreichen einer Spannungsgrenze einen kurzschlussartigen Zustand realisiert. So sind elektronische Schaltungen bekannt, welche bei Abweichungen vom Normalbetrieb einen niederohmigen Zustand durch Ansteuerung eines Leistungshalbleiters realisieren. Diese Geräte besitzen häufig eine komplexe Messung und Bewertung, so können beispielsweise neben der Höhe der Spannung auch Strom und Frequenz zur Beurteilung des Zustandes der Anlage bewertet werden. Vorteilhafterweise arbeiten diese Geräte reversibel und ihr Ansprechverhalten ist sehr genau einstellbar. Nachteilig ist jedoch, dass die komplexe Bewertung zu Zeitverzögerungen führt und dass die Leistungsfähigkeit durch die Bauteile bei akzeptablen Preis/Leistungsverhältnis stark limitiert ist. Dies führt unter Umständen bei ernsten Betriebsstörungen auch zur Zerstörung dieser Geräte. Ein rascher Austausch dieser Geräte ist darüber hinaus kaum möglich. Insbesondere führt die Überlastung dieser Geräte häufig zu undefinierten Überlastungen weiterer Geräte, so dass eine umfassende Überprüfung der komplexen Anlage nach der Überlastung dieser im Allgemeinen leistungsschwachen Geräte notwendig ist.

Alternativ zu solchen komplexen elektronischen Geräten sind Lösungen mit einfachen Überspannungsschutzeinrichtungen, beispielsweise auf der Basis von Funkenstrecken bekannt. Nach dem Ansprechen der Funkenstrecken sollen diese im Allgemeinen durch Verschweißen oder durch das Schmelzen von niedrig schmelzenden Materialien aus denen die Elektroden gestaltet werden oder zusätzlich eingebrachte Materialien einen stromtragfähigen Kurzschluss bilden.

Die passiven Funkenstrecken, welche im Allgemeinen auf der Basis von Gleitstrecken ausgeführt werden, besitzen eine vergleichsweise kurze Trennstrecke zwischen den Hauptelektroden. Die Ansprechspannung dieser Geräte streut stark, ist steilheitsabhängig und auch von den Umgebungsbedingungen abhängig. Im beschriebenen Anwendungsumfeld mit zahlreichen weiteren Überspannungsschutzmaßnahmen innerhalb der komplexen Anlagen, ist ein definierter Betrieb mit diesen Lösungen nur dann möglich, wenn ein ausreichender Abstand zwischen der Betriebsspannung und den für den Anlagen- und Personenschutz erforderlichen Spannungswerten besteht.

Das Dokument DE 10 2008 013447 A1 offenbart eine Überspannungsschutzeinrichtung mit Kurzschlussfunktion zum Anlagen-und Personenschutz für Niederspannungsanlagen, gemäß dem Oberbegriff des Patentanspruchs 1. Aus der DE 42 35 329 A1 ist eine Kurzschlusseinrichtung, insbesondere zum Löschen von Störlichtbögen in Niederspannungs-Schaltanlagen zur Verteilung elektrischer Energie vorbekannt. Dabei geht es bei diesem Stand der Technik um eine Lösung, die Verletzungen von Personen und Materialschäden durch Störlichtbögen begrenzt, und zwar dadurch, dass vorgeordnete Leistungsschalter zur schnellen Abschaltung veranlasst werden. Diesbezüglich wird eine Kurzschlusseinrichtung mit geringem Platzbedarf vorgestellt. Die Kurzschlusseinrichtung umfasst mindestens ein Schaltelement und mindestens einen Kurzschließer, wobei der Kurzschließer aus zwei Elektroden und aus stromführenden Teilen oder Bereichen besteht, wobei durch eine elektrodynamische Krafteinwirkung ein bewegbarer oder deformierbarer stromführender Bereich gegen die Elektroden gedrückt wird und somit ein metallischer Kurzschluss vorliegt. Das Schaltelement ist zwischen den beiden kurzschließenden elektrischen Potentialen oder Stromschienen über den Kurzschließer angeschlossen, wobei der in dem Schaltelement fließende Strom auch in den stromführenden Teilen oder Bereichen der Elektroden fließt. Das mindestens eine Schaltelement ist in Form von mindestens einem oder zwei antiparallel geschalteten Thyristoren ausgebildet, welche über externe Zündimpulse gezündet werden. Die Zündimpulse wiederum werden von einem Störlichtbogen initiiert.

Aus dem Vorgenannten ist es daher Aufgabe der Erfindung, eine weiterentwickelte Überspannungsschutzeinrichtung mit Kurzschlussfunktion zum Anlagen- und Personenschutz für Niederspannungsanlagen anzugeben, welche im Umfeld mit spezifischen Überspannungsschutzmaßnahmen weiterer Anlagenkomponenten zu keinen Störungen bei üblichen Betriebszuständen führt und die beim Ansprechen einen definierten niederohmigen Zustand mit hoher Stromtragfähigkeit realisiert. Zusätzlich sollen vorhandene Überspannungsschutzeinrichtungen vor Überlastung aufgrund massiver Störungen geschützt werden. Weiterhin soll die Überspannungsschutzeinrichtung nach dem Ansprechen einfach, schnell und gefahrlos austauschbar sein.

Die Lösung der Aufgabe der Erfindung erfolgt durch eine Überspannungsschutzeinrichtung mit Kurzschlussfunktion zum Anlagen- und Personenschutz gemäß Merkmalskombination nach Anspruch 1, wobei die Unteransprüche mindestens zweckmäßige Ausgestaltungen und Weiterbildungen umfassen.

Es wird demnach von einer Überspannungsschutzeinrichtung mit Kurzschlussfunktion zum Anlagen- und Personenschutz für Niederspannungsanlagen ausgegangen, wobei in einem gemeinsamen Gehäuse sowohl mindestens ein Überspannungsschutzelement als auch eine thermisch auslösbare Kurzschließereinrichtung angeordnet ist. Erfindungsgemäß ist die Einrichtung zum Einsetzen in ein NH-Sicherungsunterteil ausgeführt und es ist das gemeinsame Gehäuse räumlich und geometrisch analog einem NH-Sicherungseinsatz mit Kontaktmessern ausgebildet.

Die Kurzschließereinrichtung ist bei einer Ausführungsform als mechanischer Kurzschließer mit einem festen und einem beweglichen Teil ausgebildet, wobei zwischen dem festen und dem beweglichen Teil ein Opferelement befindlich ist, welches beim ersten Erreichen eines vorgegebenen I²t-Wertes eine irreversible Relativbewegung der Teile auslöst oder freigibt.

Ergänzend ist eine Zustandsanzeige mit Fernmeldefunktion vorgesehen. Die Zustandsanzeige umfasst dabei sowohl die Möglichkeit der Überwachung, inwieweit die Überspannungsschutzeinrichtung in ein NH-Sicherungsunterteil eingesetzt ist, also auch den tatsächlichen Betriebszustand.

Die Zustandsanzeige kann neben einem Mikroschalter auch einen mechanisch ausgelösten Bolzen umfassen, wobei im Auslösezustand der Bolzen ein Wiedereinsetzen der Einrichtung in das NH-Sicherungsunterteil blockiert.

Im gemeinsamen Gehäuse der Überspannungsschutzeinrichtung ist bei einer Ausführungsform der Erfindung eine Parallelschaltung angeordnet, bestehend aus einer Reihenschaltung eines Spannungsschaltelements, des Opferelements und der Kurzschließereinrichtung im ersten Zweig und mindestens einem spannungsbegrenzendes Element im zweiten Zweig.

Das Spannungsschaltelement kann als, auch triggerbare, Funkenstrecke, Gasableiter, Halbleiterschalter oder Diode ausgeführt werden.

Das spannungsbegrenzende Element ist z.B. als Varistor oder PTC-Element ausgebildet oder umfasst eine Reihenschaltung aus Varistor und PTC-Element.

Das Opferelement ist bevorzugt als metallisches Teil mit definiertem Schmelzverhalten bei Strombelastung ausgebildet.

Das Opferelement kann alternativ oder ergänzend temperatursensibel fixiert und unabhängig von seinem Schmelzintegral bei Erreichen einer vorgegebenen Temperatur ausgelöst werden.

Bei einer Ausführungsform der Erfindung ist über einen Öffnungszugang des Gehäuses der Arbeits- und Empfindlichkeitsbereich der Einrichtung einstellbar.

Die Einstellung der Ansprechspannung kann durch einstellbare Spannungsteiler, durch Brücken oder durch Trennen vorgegebener Schaltelemente oder durch Passivieren oder Aktivieren von elektronischen Bauelementen vorgenommen werden.

Der die Zustandsanzeige realisierende Bolzen ist bevorzugt als federvorgespannter Schlagbolzen ausgebildet, dessen Bewegung vom beweglichen Teil der Kurzschließereinrichtung im Kurzschlussfall freigegeben, ansonsten gesperrt ist. Die Bewegungsrichtung und die Länge des Bewegungswegs des Schlagbolzens sind unabhängig von Richtung und Betrag der Bewegung des beweglichen Teils der Kurzschließereinrichtung wählbar.

Beim Einsatz eines Leistungshalbleiters als spannungsschaltendem Element kann eine gezielte Ansteuerung der Einrichtung bei elektrischen oder mechanischen Störungen der betreffenden zu schützenden Anlage vorgenommen werden.

Bei einer Variante der Erfindung ist der Kurzschließer mit Opferelement in eine Funkenstrecke als dem einzusetzenden Überspannungsschutzelement integrierbar. Die Funkenstrecke kann dabei mit oder ohne Triggereinheit ausgeführt sein.

Die vorgestellte Überspannungsschutzeinrichtung ist trotz überwiegend passiver Ausführung sowohl gegenüber betriebsbedingten Störgrößen als auch energiearmen transienten Belastungen unempfindlich. Der Ansprechwert der Schutzeinrichtung wird in einem weiten Frequenzbereich relativ konstant gehalten. In einer weiteren Ausführungsform kann die Streuung des Ansprechwertes selbst bei starken Schwankungen der Umgebungsbedingungen stark begrenzt werden. Bei der Aktivierung der Überspannungsschutzeinrichtung wird ein definierter dynamisch und dauerhaft kurzschlusstragfähiger Zustand realisiert. Der Zustand des Kurzschließers wird gemeldet und angezeigt. Die kurzgeschlossene Überspannungsschutzeinrichtung führt auch bei fahrlässigem Austausch beispielsweise im nicht spannungsfreien Zustand an der Anlage zu keiner Personengefährdung.

Die Überspannungsschutzeinrichtung besitzt die geometrischen Abmessungen einer NH-Sicherung und wird bevorzugt in einem NH-Sicherungslasttrenner eingesetzt.

Der Sicherungslasttrenner besitzt eine Anzeige, welche den Einsatz der Schutzeinrichtung und auch die Öffnung erfasst. Darüber hinaus besitzt der Sicherungslasttrenner eine Mikroschalterfunktion, mit welcher der Zustand der Überspannungsschutzgeräte bzw. deren Auslösung fernmeldbar ist. Der Sicherungslasttrenner verfügt zudem über ein ausreichendes Lasttrennvermögen, so dass die Überspannungsschutzeinsätze bei realisierter Fail-Short-Funktion selbst bei Nennspannung in der Anlage gefahrlos geöffnet werden kann.

Die Überspannungsschutzeinrichtung besitzt einen definierten sehr engen Ansprechbereich, welcher nur eine geringe Abhängigkeit gegenüber Umgebungsbedingung und auch gegenüber der Spannungsanstiegsgeschwindigkeit besitzt. Die Überspannungsschutzeinrichtung besitzt ein sogenanntes Opferelement, welches bei Kurzschluss und Erreichen eines definierten I²t-Wertes die Bewegung eines mechanischen Kurzschließers irreversibel aktiviert. Der Kurzschließer kann alternativ oder zusätzlich bei Erwärmung infolge eines Stromflusses aktiviert werden. Der Kurzschließer wird bei Überspannungen, welche mit geringer Energie verbunden sind, beispielsweise bei Schalt- oder Burstimpulsen trotz einer spannungsbegrenzenden Wirkung der Einrichtung nicht aktiviert. Die Dauerstromtragfähigkeit des Opferelementes wird so ausgelegt, dass diese geringer als die Nennstromstärke der Überstromschutzeinrichtungen der Anlage ist. Die Kurzschlusstragfähigkeit der Einrichtung beträgt ein Vielfaches der Nennstromstärke der Anlage, so dass bei rotierenden Maschinen mit großer Masse auch bei einem Wechsel vom motorischen Betrieb in den Generatorbetrieb die rückgespeiste Energie sicher auch über längere Zeiten abgeführt werden kann. Der Spannungsabfall über der Schutzeinrichtung liegt selbst bei Strömen von mehreren 10 kA unterhalb der Grenzwerte der Personenschutzkennlinie.

Sowohl die Ansprechspannung als auch der I²t-Wert des Opferelementes sind bei passiver Ausführung leicht voreinstellbar. Bei einer weiteren aktiven Ausführung kann die Ansprechspannung variabel eingestellt werden.

Insbesondere die leichte und gefahrlose Austauschbarkeit einer eigentlich während des Anlagenbetriebes "passiven Schutzkomponente ist natürlich problematisch, da die Anlage prinzipiell auch ohne die Schutzeinrichtung funktionsfähig ist. Für einen sicheren Betrieb muss die Schutzeinrichtung unbedingt jedoch zwingend installiert sein. Im Allgemeinen werden die Schutzeinrichtungen daher fest mit der Anlage verbunden. Bei dem Ansprechen dieser Einrichtungen liegt häufig nicht einmal eine eindeutige Anzeige oder Fehlermeldung vor. Für eine Wiederinbetriebnahme ist damit häufig eine aufwendige Fehlersuche, Demontage und Neuinstallation durch qualifiziertes Personal verbunden.

Das erfinderische Überspannungsschutzelement wird bevorzugt in einpoliger Ausführung in der Geometrie einer NH-Sicherung gefertigt. Diese Geometrie ermöglicht den Einsatz in NH-Sicherungsunterteilen entsprechender Baugröße. Dies erlaubt ebenfalls eine flexible Integration der Schutzeinrichtung im zu schützendem Netz. So sind durch externe bzw. interne Verschaltungen je nach Anlage Anordnungen des Überspannungsschutzgerätes gegen Erde, gegen den Nullleiter zwischen den Phasen oder auch in Kombination einfach zu realisieren.

Um die unbemerkte Entnahme der Einsätze nach der Inbetriebnahme zu vermeiden, wird der Einsatz der Einheiten in einem NH-Sicherungslasttrenner mit der Möglichkeit der Verrieglung bzw. auch der Plombierung vorgeschlagen. Bevorzugt werden NH-Sicherungslasttrenner mit einer elektrischen Fernmeldung zum Zustand des Trenners verwendet. Dies erlaubt die Einbindung in die allgemeine Steuerung und Kontrolle der Anlagen und führt zur unmittelbaren eindeutigen Fehlermeldung bei Inbetriebnahme der Anlage auch ohne optische Sichtkontrolle. Dies ermöglicht eine lückenlose Kontrolle des Einsatzes der Schutzeinrichtungen nach der Inbetriebnahme der Anlage.

Die reine Anzeige des Vorhandenseins des Überspannungsschutzeinsatzes erlaubt jedoch keine Aussage über dessen Zustand. Die Überspannungsschutzeinrichtung wird daher mindestens mit einer optischen Anzeige analog zu Sicherungen ausgestattet, welche den Kurzschlusszustand bei einer visuellen Kontrolle eindeutig kennzeichnet. Insbesondere wird jedoch eine Anzeige mit einem Schlagbolzen bevorzugt, welche bei einem ebenfalls bevorzugten NH-Sicherungslasttrenners mit Fernmeldekontakten im Falle des Kurzschließens eines oder mehrerer Schutzeinsätze eine eindeutige Meldung an die Anlagensteuerung gibt. Dies erleichtert eine rasche und gezielte Wiederinbetriebnahme der Anlage. Durch den Schlagbolzen wird ebenfalls der Einsatz eines bereits ausgelösten Einsatzes sicher vermieden.

Durch den Einsatz der Schutzeinrichtungen in einem NH-Sicherungslasttrenners kann eine gefahrlose Entnahme der kurzgeschlossenen Schutzeinrichtungen erfolgen, da die gewählte Schalteinrichtung ein Eigenschaltvermögen besitzt, welche oberhalb der Nennspannung und der Nennströme der Anlage liegt. Daher entsteht selbst bei fehlerhafter Bedienung, also beim Öffnen bei noch nicht abgeschalteten Überstromschutzeinrichtungen der Anlage oder auch bei Generator- Betrieb der Maschinen keine Gefährdung für das Bedienpersonal durch die Auftrennung der niederohmigen Kurzschlussbrücke beim Öffnen des Lasttrenners.

Wie bereits erwähnt, können aufgrund der Betriebs- und Anlageneffizienz die beim Betrieb auftretenden Spannungen und die für den Anlagen- und Personenschutz geforderten Spannungen sehr dicht zusammen liegen. Ein Ansprechen der Schutzeinrichtung bei Normalbetrieb muss jedoch vermieden werden. Ebenso sollte ein Ansprechen bei energiearmen Störungen mit höherer Amplitude trotz Begrenzung der Überspannung vermieden werden.

Die Erfindung soll nachstehend anhand von Ausführungsbeispielen sowie unter Zuhilfenahme von Figuren näher erläutert werden.

Hierbei zeigen:
- Fig. 1: eine erste Ausführungsform der Überspannungsschutzeinrichtung in NH-Bauform mit internem Kurzschließer für Netzanwendungen;
- Fig. 2: eine zweite Ausführungsform der Überspannungsschutzeinrichtung;
- Fig. 3: eine dritte Ausführungsform der Überspannungsschutzeinrichtung mit prinzipieller Darstellung einer Einstellmöglichkeit der Ansprechspannung;
- Fig. 4a: bis c verschiedene prinzipielle Ausführungsformen von Möglichkeiten zur Einstellung der Ansprechspannung;
- Fig. 5a: bis c die Darstellung einer prinzipiellen Anordnung der erfindungsgemäßen Überspannungsschutzeinrichtung, ausgebildet als NH-Sicherungseinsatz, befindlich in einem NH-Sicherungsunterteil (Fig. 5a) und verschiedene Schaltungen bezüglich einer realisierten Überwachungsfunktion der erfindungsgemäßen Überspannungsschutzeinrichtung (Fig. 5b und c);
- Fig. 6: ein prinzipieller Aufbau einer Überspannungsschutzeinrichtung in NH-Bauform mit Schlagbolzen zur optischen Funktionsanzeige;
- Fig. 7: eine perspektivische Ansicht einer realisierten Ausführungsform der Überspannungsschutzeinrichtung mit Schlagbolzen als Funktionsanzeige und
- Fig. 8: ein Blockschaltbild einer Anwendung der erfindungsgemäßen Überspannungsschutzeinrichtung.

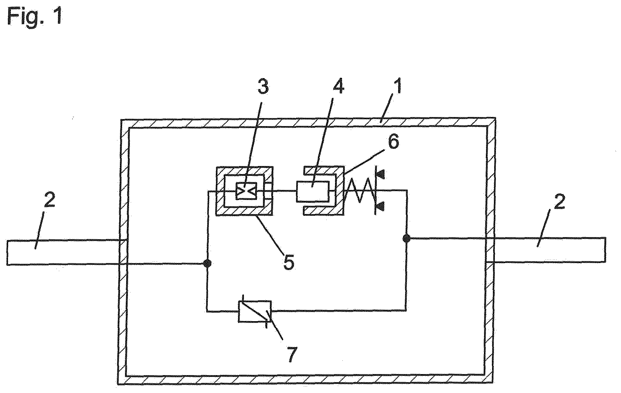

Zur Realisierung einer passiven Lösung wird eine Anordnung entsprechend Fig. 1 vorgeschlagen. Innerhalb eines Gehäuse 1 mit zwei Anschlüssen in Kontaktmesserform 2 wird eine elektrische Parallelschaltung angeordnet. Ein Zweig der Parallelschaltung besteht aus der Reihenschaltung eines Spannungsschaltelements 3, eines Opferelements 4 und eines Kurzschließers mit zwei Elektroden 5 und 6. Beim Ansprechen des Opferelementes wird dieser Zweig durch den niederimpedanten Kurzschließer, welcher die zwei Elektroden 5, 6 umfasst, gebrückt. Mindestens eine der Elektroden ist beweglich und federvorgespannt. Bevorzugt parallel zu der gesamten Anordnung befindet sich mindestens ein spannungsbegrenzendes Element 7.

Das Element 7 kann als Varistor bzw. als die Kombination von Varistor und PTC ausgeführt sein. Das Element begrenzt Überspannung erst ab einer Höhe, welche bei ca. der doppelten Nennspannung liegt. Unterhalb dieser Spannung verhält sich das gesamte Überspannungsschutzelement passiv. Dem Element 7 kann zusätzlich ein hochohmiger Widerstand parallelgeschaltet sein. Die Gesamtanordnung besitzt eine vernachlässigbare elektrische Kapazität, so dass auch bei hohen Frequenzen kaum Blindströme fließen. Das spannungschaltende Element 3 kann u.a. passiv als Gasentladungsableiter, als Diode/n bzw. auch aktiv als triggerbare Funkenstrecke bzw. Halbleiterschalter ausgeührt werden. Das Opferelement 4 ist bevorzugt ein passives metallisches Element mit definiertem Schmelzverhalten bei Strombelastung ähnlich einer elektrischen Sicherung. Die Zeit/Stromkennlinie ist sowohl im adiabatischen Bereich als auch bei langen Schmelzzeiten definiert und kann mit verschiedenen Anlagenschutzsicherungen unabhängig von der Kurzschlusstragfähigkeit des Einsatzes abgestimmt werden. Neben dem Schmelzpunkt des metallischen Materials des Opferelementes kann auch die Befestigung des Elementes 4 temperatursensibel ausgeführt werden, so dass unabhängig von der Zeit/Stromkennlinie des Elementes 4 auch eine Auslösung des Kurzschließers nur bei Erreichen einer definierten Temperatur erfolgt.

Das Opferelement 4 kann beispielsweise eine Stützfunktion ausüben. Die bewegliche Elektrode 6 beansprucht in diesem Fall das Bauteil 4 auf Druck und die Feder ist als Druckfeder ausgeführt. Wird die Feder für die Bewegung der Elektrode 6 als Zugfeder ausgeführt, wird das Element 4 auf Zug beansprucht. Bei der Beanspruchung auf Druck kann das Element 4 beispielsweise rohrförmig und bei der Beanspruchung auf Zug seilförmig ausgebildet sein.

Wird ein Gasentladungsableiter als spannungsschaltendes Element 3 eingesetzt, so wird der Gleichspannungsansprechwert so gewählt, dass dieser deutlich oberhalb des Ansprechwertes des spannungsbegrenzenden Elementes 7 liegt. Für die Anwendung wird zudem bevorzugt ein Gasentladungsableiter mit geringer Streuung und flacher Kennlinie also geringer Abhängigkeit von der Spannungsanstiegsgeschwindigkeit gewählt. Durch die Abstimmung mit dem Element 7 kann für den Überspannungsschutzeinsatz bei Überspannungen mit sehr geringer Spannungssteilheit bis hin zu Spannungsimpulsen mit hoher Spannungssteilheit beispielweise Burstimpulsen eine Ansprechspannung im Bereich der engen Streuung des Gleichansprechwertes des Gasentladungsableiters 3 gewährleistet werden.

Überspannungsimpulse mit geringem Pegel bzw. geringer Energie werden ohne Ansprechen des spannungsschaltenden Elementes 3 über das spannungsegrenzende Element 7 abgeführt. Bei energiestarken Belastungen wird nach dem Ansprechen des Bauteiles 3 das Opferelement 4 mit Strom belastet. Der Überspannungsschutzeinsatz wird zu diesem Zeitpunkt niederohmig, so dass bereits vor dem Erreichen eines metallischen Kurzschlusses die Anforderungen des Anlagen- und Personenschutzes erfüllt werden. Entsprechend der Zeit/Strom-Kennlinie des Opferelementes 4 erfolgt die Auslösung des metallischen Kurzschließers und die bewegliche Elektrode 6 wird zur feststehenden Elektrode 5 geführt. Der entstehende metallische Kurzschluss kann Kurzschlussströme von mehreren 10 kA sicher beherrschen und besitzt auch eine hohe Dauerstromtragfähigkeit von mehreren 100 A. Durch die Wahl der passiven Elemente insbesondere der Teile 3, 4 und 7, kann der Überpannungseinsatz für unterschiedlichste Anforderungen in einfacher Weise angepasst werden. Bezüglich der Grenzleistung spielt die Wahl des NH-Sicherungslasttrenners eine entscheidende Rolle. Diese Geräte sind derzeit für eine Spannungsebene bis ca. 1000 V, Dauerströme bis ca. 1000 A und Kurzschlussströme bis ca. 25 kA mit sogenannten Trennmessern verfügbar.

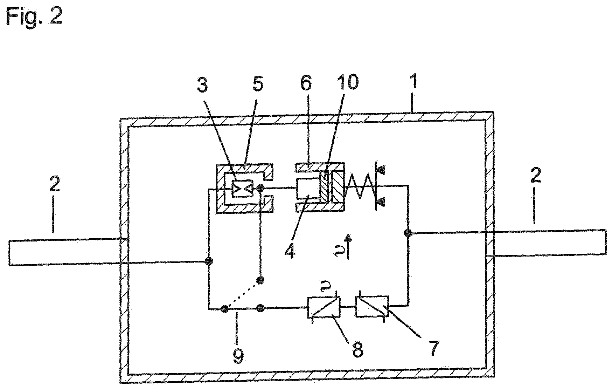

Der Überspannungseinsatz kann im Zweig mit dem spannungsbegrenzenden Element 7 über zusätzliche Schutzeinrichtungen verfügen, welche bei langanhaltenden Belastungen eine sichere Funktion gewährleisten. Eine solche Prinzipanordnung zeigt beispielhaft Fig. 2. Durch die Kombination eines Varistors mit einem PTC 8 kann bei unzulässiger Erwärmung des Varistors der Strom durch den Varistor begrenzt werden und ggf. bei ausreichender treibender Spannung das Element 3 aktiviert werden. Die Erwärmung kann jedoch auch für eine Abtrennung des Varistors genutzt werden.

Ist in diesem Fall eine Aktivierung des Kurzschließers erwünscht, kann dies durch die Nutzung der Bewegung des Abtrennbügels 9 erfolgen. Der Bügel 9 kann hierbei eine Verbindung von einem netzseitigen Anschlusses direkt zum Opferelement 4 unter Brückung des Elementes 3 genutzt werden. Hierbei ist nur zu gewährleisten, dass der Abtrennbügel 9 eine höhere Stromtragfähigkeit, als das Opferelement 4 besitzt. Durch eine temperatursensible Fixierung 10 des Opferelements 4 kann jedoch auch direkt die Verlustwärme des Elementes 7 bzw. auch eines möglicherweise vorhandenen PTC's 8 zur Auslösung des Kurzschließers genutzt werden. Bei aktiven Elementen 3 kann selbstverständlich auch eine Ansteuerung des Halbleiters durch einen NTC oder PTC bei Erwärmung der Anordnung erfolgen.

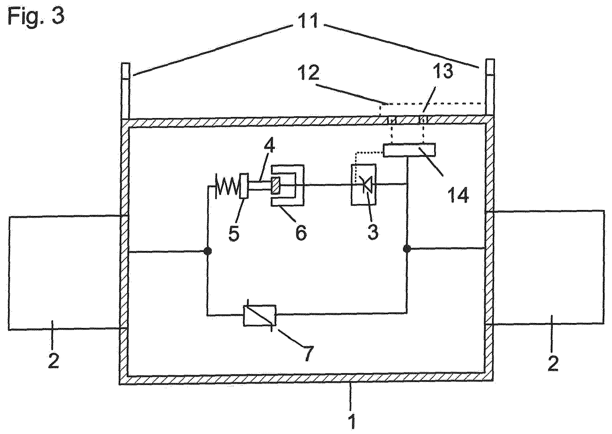

Die Ausführung des Überspannungseinsatzes entsprechend den Fig. 1 bzw. 2 erlauben nur eine einmalige Einstellung des Arbeitsbereiches bei der Herstellung. In Fig. 3 wird in eine Prinzipdarstellung eine Anordnung gezeigt, welche auch nach der Montage der Überspannungsschutzeinheit in einem NH-sicherungsförmigen Einsatz die nachträgliche Anpassung des Arbeitsbereiches für die jeweilige Anwendung erlaubt.

Der NH- Einsatz besitzt hierzu bevorzugt auf der Seite zwischen den NH-Grifflaschen 11 eine abnehmbare Abdeckung 12 bzw. eine Öffnung 13 zum Einsatz eines Spezialwerkzeuges. Dies erlaubt in einfacher Art und Weise die Einstellung der "Ansprechspannung" des Bauteiles 3 bei der Verwendung einer triggerbaren Funkenstrecke oder auch die Einstellung bei einer Ausführungsform mit Halbleiterschalter als Element 3.

Die Funktionselemente des Überspannungseinsatzes sind bei einer solchen Ausführung selbstverständlich für die obere Belastungsgrenze ausgelegt. Dies betrifft insbesondere die maximale Betriebsspannung, an der sich die Spannungsfestigkeit aller Bauteile und Trennstrecken orientiert, und die maximalen Kurzschlussströme, welche durch den Kurzschließer mechanisch und thermisch beherrscht werden.

Die Abstimmung beschränkt sich daher im Wesentlichen auf die Einstellung der Ansprechspannung. Entsprechend der Darstellung in Figur 3 kann als Halbleiterschalter beispielweise ein Thyristor eingesetzt werden, jedoch ist auch der Einsatz eines IGBT's oder Mosfet's denkbar. Wird zur Spannungserfassung und Bewertung beispielsweise eine übliche Komparatorschaltung eingesetzt, kann eine stufenlose Einstellung beispielweise durch ein oder mehrere einstellbare Bauelemente im Spannungsteiler erfolgen. Alternativ kann der Spannungsteiler auch aus mehreren Bauteilen in Längs- oder Parallelschaltung aufgebaut sein und die Einstellung erfolgt durch Passivieren oder Aktivieren einzelner Bauteile des Spannungsteilers beispielsweise durch Brücken oder kontaktieren. Durch diese Variante ist die Einstellung diskreter Stufen der Ansprechspannung möglich. Dieses Prinzip ist grundsätzlich auch bei einer einfachen Ansteuerung des Leistungshalbleiters beispielsweise eines Thyristors mit Suppressordioden möglich. Die Reihenschaltung von Suppressordioden kann in diesem Fall durch Brücken einzelner Dioden zur Einstellung diskreter Stufen genutzt werden. In Figur 3 wird die Steuerung 14 nur beispielhaft und symbolisch aufgrund der zahlreichen Möglichkeiten angedeutet.

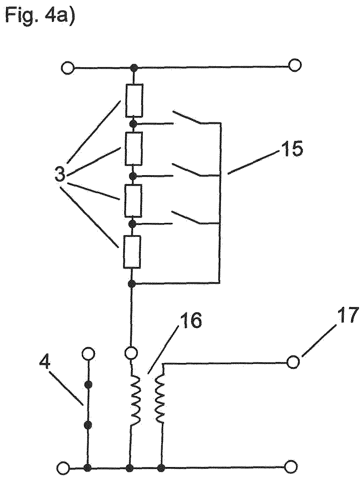

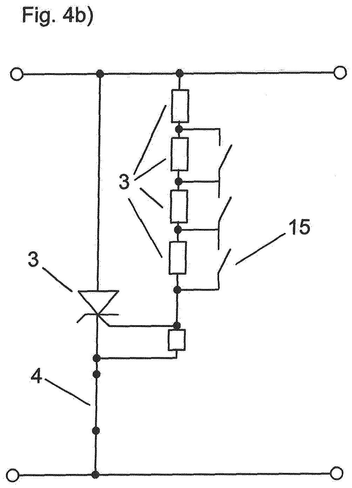

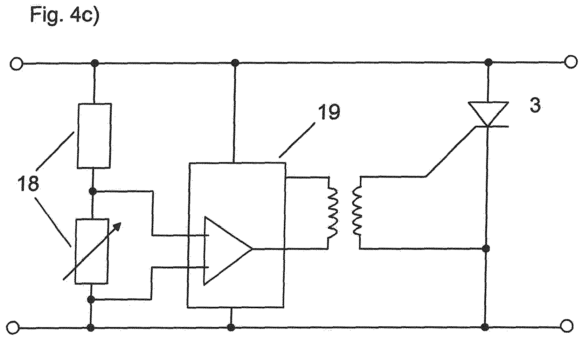

Die ausschließlich prinzipiellen Darstellungen in den Fig. 4a bis c zeigen nur einige Beispiele für in nachträglich in Stufen bzw. auch stufenlos einstellbare Ansprechspannung eines Überspannungsschutzeinsatzes mit Kurzschließerfunktion. Die Fig. 4 a zeigt eine in Stufen einstellbare Ausführung mit einer Reihenschaltung aus passiven spannungsschaltenden Elementes 3. Die Elemente können u.a. Dioden, Suppressordioden, Gasentladungsableiter etc. sein. Parallel zu den Elementen 3 sind Kontaktierungen 15 vorgesehen, welche das Überbrücken einzelner oder mehrerer dieser Elemente 3 erlaubt. Die Elemente 3 können selbstverständlich auch über spannungssteuernd Maßnahmen verfügen. Die Überbrückung kann neben mechanischen Mechanismen auch durch elektronische Bauteile realisiert werden. Die Reihenschaltung kann direkt mit dem Opferelement 4 verbunden sein, oder auch mit einer Triggervorrichtung zur Zündung einer Funkenstrecke beispielweise über einen Zündübertrager 16 und eine Kontaktierung 17 für eine Hilfselektrode. Die in Bild 4a nicht dargestellte Funkenstrecken ist dabei in Reihe zum Opferelement geschaltet ist.

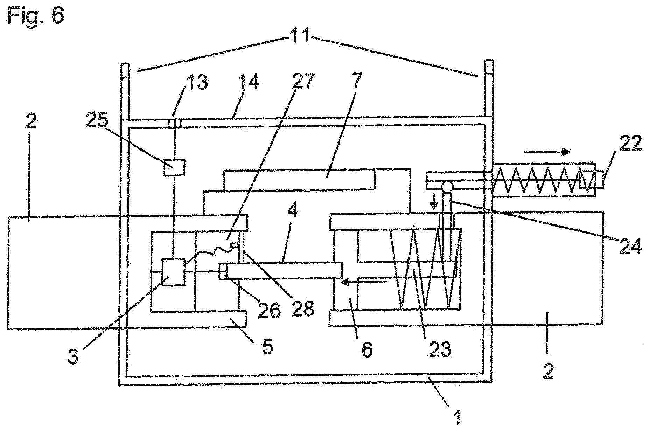

Fig. 4 b zeigt eine Variante, bei der die diskrete Einstellung der Ansprechspannung durch die Einstellung der Zündschwelle eines Halbleiterbauteiles erfolgt. In der Darstellung ist in einer vereinfachten Ausführungsform eine Schaltung mit einem Thyristor dargestellt, welcher als Element 3 dient und in Reihe mit dem Opferelement 4 geschaltet ist. Andere Halbleiterbauteile sind selbstverständlich ebenfalls einsetzbar. Die Schaltung kann jedoch auch zur Ansteuerung einer aktiven oder passiven Zündeinrichtung für die Strecke zwischen einer Hauptelektrode und dem Opferelement, wie noch später erläutert in Fig. 6 wird dienen.

In Fig. 4 c wird symbolisch eine Möglichkeit zur stufenlosen Regelung dargestellt, dabei wird die Ansprechspannung durch die Einstellung des Spannungsteilers 18 einer Komparatorschaltung 19, welcher zur Ansteuerung eines Leistungshalbleiters 3 dient, realisiert.

Die Aktivierung des Kurzschließers über einen Halbleiterschalter ist insbesondere dann zu bevorzugen, wenn die gewünschte Ansprechspannung beispielsweise nun innerhalb einer kleinen Toleranz z.B. von nur 10 oder wenigen 10 V oder auch bei sehr kleinen Spannungswerten beispielsweise <100 V erfolgen soll. Durch eine entsprechende Auswahl und Dimensionierung der Schaltung kann die Lösung auch bei stark schwankenden Umgebungsbedingungen z.B. der Temperatur oder Feuchtigkeit gut eingesetzt werden.

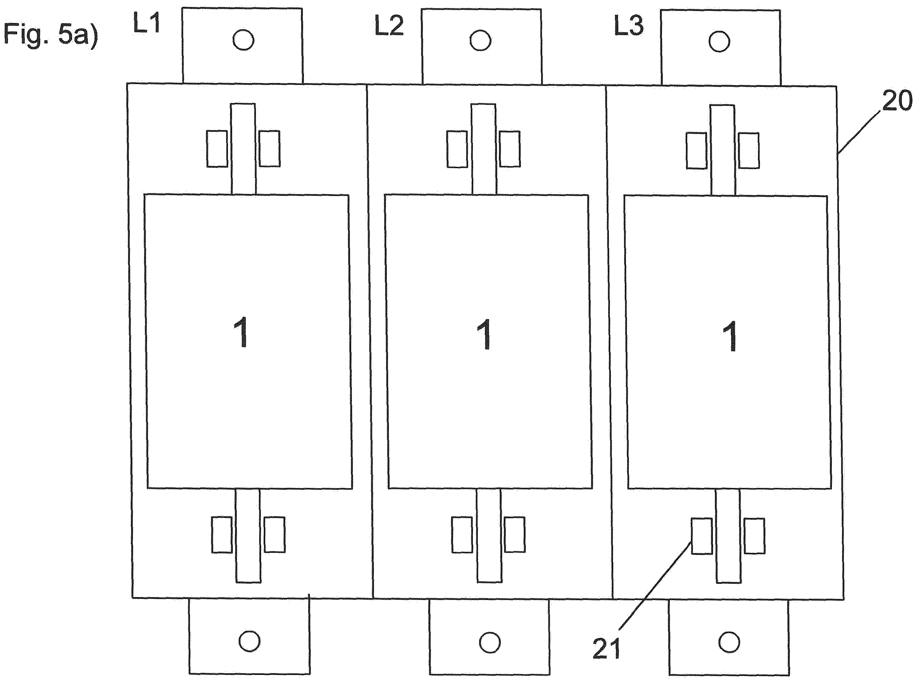

In den Fig. 5a bis c wird symbolisch eine Anordnung von drei Überspannungsschutzeinsätzen 1 in einem NH-Sicherungslasttrenner 20 dargestellt. Auf die Darstellung in Fig. 5a des Deckels, in welchem die Sicherungsgrifflaschen 11 zum berührungssicheren Einsetzen und Entnehmen befestigt sind, wurde aufgrund der Übersichtlichkeit verzichtet. Die Messerklemmkontakte 21 des Schalters und die einzelnen Phasen L1, L2; L3 sind gegeneinander bei entnommenen bzw. gezogenen Einsätzen 1 entsprechend den Anforderungen im Niederspannungsbereich sicher getrennt. Für die Anwendung mit Überspannungsschutzeinsätzen können die Anschlüsse durch entsprechende externe bzw. interne Verbindungen verschaltet werden. Dies erlaubt sowohl die Anordnung der Geräte zwischen den Phasen als auch gegen den Neutralleiter bzw. gegen Erde. Bei einer Kombination dieser Beschaltungen kann ein weiterer ein- bzw. auch dreipoliger NH-Lasttrenner verwendet werden.

Der NH-Sicherungslasttrenner 20 besitzt, wie bereits erwähnt, die Möglichkeit nach dem Einsetzen der Schutzeinsätze und dem Schließen des Deckels der Verrieglung und der Absperrung bzw. Verplombung.

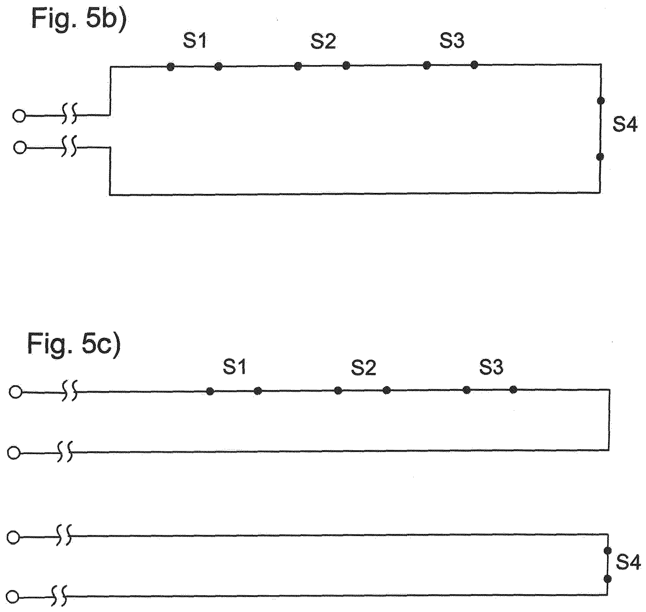

Bevorzugt werden jedoch NH-Sicherungslasttrenner mit einem Fernmeldekontakt verwendet, welche die Präsens der Sicherung bzw. des Schutzeinsatzes im Sicherungsunterteil bzw. die Öffnung des Deckels anzeigen. Insbesondere bevorzugt wird jedoch eine Ausführungsform mit einem Fernmeldekontakt entsprechend der Figur 5b und c. Der NH-Sicherungslasttrenner besitzt einen durchgeschleiften Kontakt S4, welcher die Öffnung des Deckels und mit den Öffnern S1 - S3 den Zustand der Sicherungen / Schutzeinsätze überwacht. Der Schalter S4 wird beim Schließen des Deckels geschlossen. Im Zusammenhang mit einer Kontrolleinrichtung und ggf. einer Verrieglung bzw. Plombierung kann ein unzulässiger Betrieb ohne Schutzeinsätze der Anlage trotz leichter Tauschbarkeit im Störfall gesichert werden. Werden die Schutzeinsätze 1 mit Schlagbolzen entsprechend von NH-Sicherungen versehen, kann über die Öffner S1 - S3 der Zustand der Einsätze erfasst werden. Die Anordnung 5 b) erlaubt nur die gemeinsame Überwachung dieser Zustände mit einer Anzeige bei der Kontrolleinrichtung. Die Öffneranordnung 5 c) gestattet hingegen eine getrennte Bewertung der Signalgabe in der Kontrolleinrichtung und bietet daher eine detaillierte Information bei einer Störung.

Um den Zustand des Überspannungseinsatzes zu erfassen, muss in dem NH-förmigen Einsatz ein Schlagbolzen integriert werden, welcher sowohl geometrisch als auch mechanisch dem einer NH-Sicherung entspricht. Die geometrische Anordnung verläuft bei NH-Sicherung außerhalb von Symmetrieachsen. Der Hubweg und die Kraft des Schlagbolzens sind u.a. zur Betätigung von Schaltern ausgelegt und daher relativ lang bzw. groß.

Sowohl die unsymmetrische Anordnung, als auch der lange Hubweg von bis zu 20 mm sprechen gegen eine unmittelbare Nutzung der Bewegung der Elektrode 6 mit nur wenigen mm Hubweg.

Bei Sicherungen wird die Bewegung im Allgemeinen durch die Befestigung des Schlagbolzens an einem weiteren Schmelzleiter realisiert. Der Schlagbolzen wird durch eine externe Feder bei der Befestigung des zusätzlichen Schmelzleiters mit geringer Nennstromstärke vorgespannt. Dieses Prinzip erlaubt nahezu eine beliebige Positionierung, Kräfte und Hubwege. Es bedingt zudem bei der Sicherungsfertigung neben den Aufwand der zusätzlichen Teile keine nennenswerten Zusatzkosten. Bei einem Kurzschließer mit geringerem Hubweg ist es jedoch nicht anwendbar. Um dennoch einen Schlagbolzen mit großer Kraft und langem Hubweg zu realisieren wird daher folgende nicht einschränkende Lösung vorgeschlagen.

Figur 6 zeigt einen stark vereinfachten beispielhaften inneren Aufbau eines Überspannungsschutzeinsatzes 1 mit externen Schlagbolzen 22. Die bewegte Elektrode 6 des Kurzschließers besitzt einen stabförmigen Fortsatz 23, welcher bis in ein feststehendes Teil des Einsatzes hineinragt. Der Fortsatz blockiert bei geöffnetem Kurzschließer einen Bolzen 24, welcher den federvorgespannten Schlagbolzen 22 blockiert. Beim Schließen des Kurzschließers gibt der stabförmige mitbewegte Fortsatz den Bolzen frei und der Schlagbolzen wird ausgetrieben. Die Pfeile innerhalb der Figur 6 deuten die Bewegungsabläufe von innen nach außen (auch zeitlich betrachtet) an. Diese Lösung erlaubt einen vom Kurzschließer unabhängigen Bewegungsweg des Schlagbolzens. Eine gleitende oder abrollende Bewegung des Bolzens erlaubt auch eine weitestgehend unabhängige Dimensionierung der Federkraft des Kurzschließers und des Schlagbolzens. Durch die relativ freie Dimensionierung der Lage und der Geometrie des Bolzens kann auch die Lage und die Geometrie der bewegten (6) und der feststehenden Elektrode (5) unabhängig von der äußeren Lage des Schlagbolzens gewählt werden.

Bei einer Ausführung entsprechend Fig. 2 kann die Auslösung des Schlagbolzens selbstverständlich auch mit der Bewegung des Teiles 9 verbunden werden. Anstelle der Zugbewegung der bewegten Elektrode kann auch eine Schubbewegung des mitgeführten Stößels genutzt werden. Ebenso kann auch der Druck der bewegten Elektrode bei Erreichen der feststehenden Gegenelektrode durch Integration eines beweglichen Stößels in der festen Elektrode verwendet werden.

Entsprechend der Figur 6 kann die Einstellung der Ansprechschwelle über die Öffnung 13 an einer separaten Einheit 25 erfolgen, welche mit dem spannungsschaltenden Element 3 verbunden ist.

Das spannungsschaltende Bauteil 3 kann, wie beispielsweise in Fig. 1 direkt mit dem Opferelement 4 verbunden sein. In diesem Fall muss das Bauteil den Strom bis zum Schmelzen des Opferelementes 4 dauerhaft führen. Anhand von Figur 6 sollen zwei weitere Möglichkeiten aufgezeigt werden. Das Bauteil 3 kann eine Triggereinheit für eine Funkenstrecke sein. Die Funkenstrecke selbst besteht aus dem Opferelement 4 bzw. einem galvanisch mit diesem verbundenen Stützelement 26, der feststehenden Hauptelektrode 5 und einer isoliert zwischen den Bauteilen 4/26 und 5 angeordneten Hilfselektrode 27. Die Anordnung besitzt den Vorteil, dass keine separate Funkenstrecke ausgebildet werden muss und die benötigten zusätzlichen elektrischen Verbindungen aufgrund der geringen Strombelastung keinen nennenswerten Querschnitt besitzen müssen.

Wird für die Anpassung der Ansprechspannung keine triggerbare Funkenstrecke eingesetzt, sondern beispielsweise ein Thyristor kann auch dessen Stromtragfähigkeit unabhängig von dem I²t- Wert des Opferelementes gewählt werden, wenn zur Zündung der Isolationsstrecke zwischen dem Element 26 /4 und der feststehenden Elektrode 5 ein zumindest einseitig isolierter Hilfsschmelzleiter 28 mit minimalen Querschnitt eingesetzt wird. In Fig. 6 wird der Hilfsschmelzleiter 28 nur symbolisch gestrichelt angedeutet und auf die Darstellung der Verschaltung mit dem Element 3 aus Gründen der Übersichtlichkeit verzichtet. Durch die Überlastung diese minimalen Schmelzleiters erfolgt eine Funkenbildung bzw. auch eine starke Verrußung zwischen den beiden Hauptpotentialen, wodurch ein Lichtbogen auch zwischen der feststehenden Elektrode und dem Opferelement entsteht, wodurch diese mit dem Lichtbogenabbrand bzw. durch den Stromfluss überlastet wird und die bewegliche Elektrode 6 zur Elektrode 5 bewegt wird.

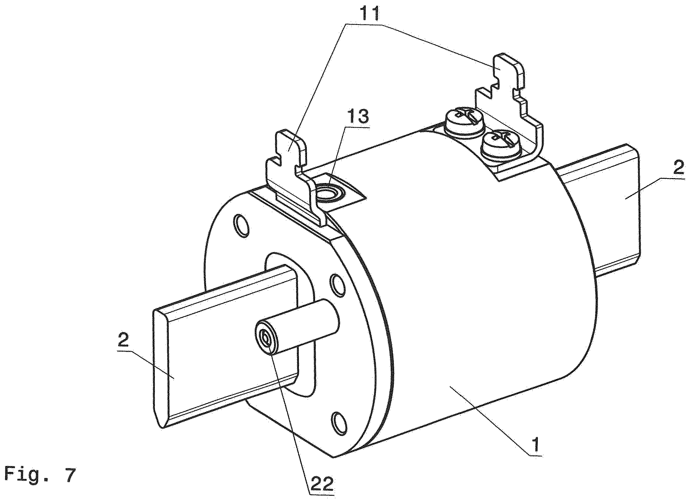

Die Fig. 7 zeigt eine beispielhafte äußere Gestaltung eines einsprechenden Überspannungsschutzeinsatzes 1. Neben oder alternativ zum Schlagbolzen 22 kann der Einsatz selbstverständlich eine optische Anzeige besitzen, welche den Zustand des Einsatzes anzeigt. Die optische Anzeige kann ähnlich ausgeführt werden also indirekt bzw. auch direkt an die Bewegung der Elektrode gekoppelt sein. Die Anforderungen an diese Gestaltung sind aufgrund der fehlenden Anforderungen an Kraft und Hubweg gering, daher wird auf eine nähere Beschreibung verzichtet. Bei einer thermischen Auslösung kann selbstverständlich insbesondere bei einer reinen Anzeige auch ein einfacher Farbumschlag von temperatursensiblen Materialien anstelle einer Bewegung verwendet werden.

Bei der Verwendung von Einsätzen 1 mit Schlagbolzen 22 beispielsweise entsprechend Figur 7 warnt ein ausgelöster Schlagbolzen mit einem Hubweg von ca. 20 mm insbesondere bei farblicher Kennzeichnung deutlich sichtbar vor einem Einsetzen in den NH-Sicherungslasttrenner. Die Gefahr des Einsatzes eines bereits ausgelösten Einsatzes selbst ohne elektrische Kontrolle und somit die ungewollte Auslösung eine Kurzschlusses ist daher äußerst gering. Durch eine spezielle Deckelgestaltung des Trenners kann sogar ein rein mechanischer Schutz realisiert werden. Dies stellt einen weiteren Sicherheitsaspekt der vorgeschlagenen Lösung dar.

Neben der vorgeschlagenen mechanischen Anzeige und Blockade kann selbstverständliche auch eine elektrische Überwachung der Überspannungsschutzeinsätze 1 durchgeführt werden. Hierzu können separate Stromsensoren oder auch im NH-Sicherungslasttrenner integrierte Stromwandler eingesetzt werden. Der ordnungsgemäße Einsatz und der Austausch von Sicherungen in einem NH-Sicherungslasttrenner auch unter Last sind bei dem Betrieb von elektrischen Anlagen üblich und gefahrlos möglich. Die Verwendung dieser Lasttrenner gestattet bei elektrischen Anlagen auch die sichere Installation von Überspannungsschutzeinsätzen mit Kurzschlussfunktion entsprechend der vorgeschlagenen Auslegung und Dimensionierung.

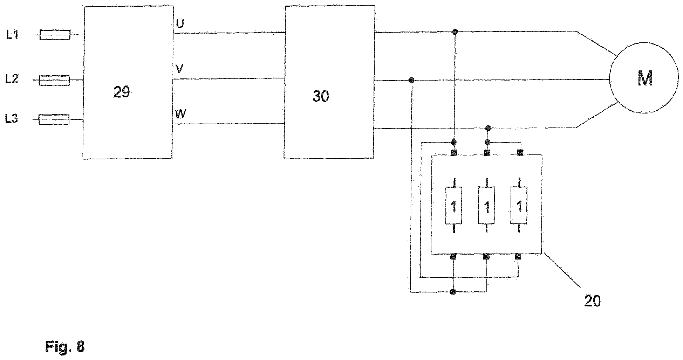

Fig. 8 zeigt eine beispielhafte dreiphasige Anlagenanordnung zum Betrieb eines Motors. Die Anordnung besitzt einen Umrichter und eine Steuerung 29 zum Betreib des Motors, welche beispielsweise bereits mit eine separaten Schutzeinrichtung inklusive Überlastschutz 30 versehen ist. Die erfinderischen Überspannungseinsätze 1 sind im NH-Sicherungslasttrenner 20 eingesetzt. Die Einsätze 1 sind in der beispielhaften Anordnung durch eine externe Verschaltung elektrisch zwischen den Phasen angeordnet. Bei einem Fehlerfall z.B. einem Ausfall des Netzversorgung oder der Steuerung kann der Motor in den Generatorbetrieb wechseln. Bei hohen Drehzahlen hierbei eine Spannung deutlich oberhalb der eigentlichen Nennspannung erzeugt werden. Durch ein rasches Ansprechen der Einsätze 1 wird die Spannung sowohl am Motor als auch an den Betriebsmitteln 29 und 30 dauerhaft und sicher auf einen sehr niedrigen Wert bis zum Stillstand der Maschine begrenzt.

Die bisherigen Ausführungen gingen von Überspannungsschutzeinsätze 1 aus, welche aktiv bzw. passiv bei Erreichen eine Schwellspannung reagieren. Insbesondere die Ausführungen mit spannungsschaltenden Elementen 3 auf der Basis von Leistungshalbleitern können jedoch auch aktiv in das Anlagenschutzkonzept eingebunden werden. Durch die gezielte Ansteuerung des Schaltelementes 3 kann die Anlage bei elektrischen oder mechanischen Störungen in einen sicheren Zustand versetzt werden. Dies ist kann auch im Fall einer Personengefährdung, im Havariefall oder im Brandfall von Bedeutung sein. Diese Funktion kann durch eine einfache Signalschnittstelle (leitungsgebunden oder auch leitungslos) zusätzlich realisiert werden.

### Bezugszeichenliste

- 1: Gehäuse eines Überspannungsschutzeinsatzes
- 2: Kontaktmesser des Überspannungsschutzeinsatzes
- 3: spannungsschaltendes Element
- 4: Opferelement
- 5: erste Elektrode des Kurzschließers
- 6: zweite Elektrode des Kurzschließers federvorgespannt
- 7: spannungsbegrenzendes Element
- 8: Kaltleiter, PTC
- 9: Abtrennbügel
- 10: temperatursensible Fixierung des Opferelementes
- 11: NH-Grifflaschen des Einsatzes
- 12: abnehmbare Abdeckung
- 13: Öffnungen im Gehäuse des Einsatzes
- 14: Steuerung
- 15: Kontaktierung zur Brückung von Elementen 3'
- 16: Zündübertrager
- 17: Kontaktierung für Hilfselektrode
- 18: Spannungsteiler
- 19: Komparatorschaltung
- 20: NH-Sicherungslasttrenner; NH-Sicherungsunterteil
- 21: Messerklemmkontakte
- 22: Schlagbolzen
- 23: stabförmiger Fortsatz
- 24: Bolzen zur Blockade
- 25: separate Einheit
- 26: Stützelement
- 27: Hilfselektrode
- 28: Hilfsschmelzleiter
- 29: Umrichter mit Steuerung
- 30: Überlastschutz

## Patentansprüche

1. Überspannungsschutzeinrichtung mit Kurzschlussfunktion zum Anlagen-und Personenschutz für Niederspannungsanlagen, wobei in einem gemeinsamen Gehäuse (1) sowohl mindestens ein Überspannungsschutzelement (3) als auch eine thermisch auslösbare Kurzschließereinrichtung (5; 6) angeordnet ist,
**dadurch gekennzeichnet, dass**
die Einrichtung zum Einsetzen in ein NH-Sicherungsunterteil (20) ausgeführt und das gemeinsame Gehäuse (1) räumlich analog einem NH-Sicherungseinsatz mit Kontaktmessern (2) ausgebildet ist.

2. Überspannungsschutzeinrichtung nach Anspruch 1,
**dadurch gekennzeichnet, dass**
die Kurzschließereinrichtung (5; 6) als mechanischer Kurzschließer mit einem festen (5) und einem beweglichen (6) Teil ausgebildet ist, wobei zwischen beiden Teilen (5; 6) ein Opferelement (4) befindlich ist, welches beim Erreichen eines vorgegebenen oder vorgebbaren I²t-Wertes eine irreversible Relativbewegung der Teile (5; 6) auslöst oder freigibt.

3. Überspannungsschutzeinrichtung nach Anspruch 1 oder 2,
**dadurch gekennzeichnet, dass**
eine Zustandsanzeige mit Fernmeldefunktion vorgesehen ist.

4. Überspannungsschutzeinrichtung nach Anspruch 3,
**dadurch gekennzeichnet, dass**
ein mechanisch ausgelöster Bolzen (22) die Zustandsanzeige bildet, wobei im Auslösezustand der Bolzen (22) ein Wiedereinsetzen der Einrichtung in das NH-Sicherungsteil (20) blockiert.

5. Überspannungsschutzeinrichtung nach einem der vorangegangenen Ansprüche,
**dadurch gekennzeichnet, dass**
im gemeinsamen Gehäuse (1) eine Parallelschaltung, bestehend aus einer Reihenschaltung eines Spannungsschaltelements (3), des Opferelements (4) und der Kurzschließereinrichtung (5; 6) im ersten Zweig und mindestens einem spannungsbegrenzenden Element (7) im zweiten Zweig vorgesehen ist.

6. Überspannungsschutzeinrichtung nach Anspruch 5,
**dadurch gekennzeichnet, dass**
das Spannungsschaltelement als, auch triggerbare, Funkenstrecke, Gasableiter, Halbleiterschalter oder Diode ausgeführt ist.

7. Überspannungsschutzeinrichtung nach Anspruch 5 oder 6,
**dadurch gekennzeichnet, dass**
das spannungsbegrenzende Element (7) als Varistor und/oder PTC-Element (8) ausgebildet ist.

8. Überspannungsschutzeinrichtung nach einem der vorangegangenen Ansprüche,
**dadurch gekennzeichnet, dass**
das Opferelement (4) als metallisches Teil mit definiertem Schmelzverhalten bei Strombelastung ausgebildet ist.

9. Überspannungsschutzeinrichtung nach einem der vorangegangenen Ansprüche,
**dadurch gekennzeichnet, dass**
das Opferelement (4) temperatursensibel fixiert und unabhängig von seinem Schmelzintegral bei Erreichen einer vorgegebenen Temperatur auslösbar ist.

10. Überspannungsschutzeinrichtung nach einem der vorangegangenen Ansprüche,
**dadurch gekennzeichnet, dass**
über einen Öffnungszugang (13) im Gehäuse (1) der Arbeits- und Empfindlichkeitsbereich der Einrichtung einstellbar ist.

11. Überspannungsschutzeinrichtung nach Anspruch 10,
**dadurch gekennzeichnet, dass**
eine Einstellung der Ansprechspannung durch einstellbare Spannungsteiler, durch Brücken oder durch Trennen vorgegebener Schaltelemente oder
durch Passivieren oder Aktivieren von elektronischen Bauelementen erfolgt.

12. Überspannungsschutzeinrichtung nach Anspruch 4,
**dadurch gekennzeichnet, dass**
der Bolzen (22) als federvorgespannter Schlagbolzen ausgebildet ist, dessen Bewegungsweg vom beweglichen Teil (6; 24) im Kurzschlussfall freigegeben, ansonsten gesperrt ist, wobei sowohl die Bewegungswegrichtung als auch die Länge des Bewegungswegs des Schlagbolzens (22) unabhängig von Richtung und Betrag des Bewegungswegs des beweglichen Teils (6) der Kurzschließereinrichtung wählbar ist.

13. Überspannungsschutzeinrichtung nach Anspruch 6,
**dadurch gekennzeichnet, dass**
beim Einsatz eines Leistungshalbleiters als spannungsschaltendem Element (3) eine gezielte Ansteuerung der Einrichtung bei elektrischen oder mechanischen Störungen der betreffenden zu schützenden Anlage (29; 30; M) erfolgt.

14. Überspannungsschutzeinrichtung nach Anspruch 2,
**dadurch gekennzeichnet, dass**
der Kurzschließer mit Opferelement (4) in eine Funkenstrecke als eingesetztem Überspannungsschutzelement integriert ist.

15. Überspannungsschutzeinrichtung nach Anspruch 14,
**dadurch gekennzeichnet, dass**
die Funkenstrecke eine Triggereinheit aufweist.

## Claims

1. An overvoltage protection device with short-circuit function for protecting persons and low-voltage system installations, wherein both at least one overvoltage protection element (3) as well as one thermally triggered short circuit device (5; 6) are arranged in a common housing (1),
**characterized in that**
the device is designed to be inserted into an NH fuse base (20) and the common housing (1) is designed with contact blades (20) to be spatially analogous to an NH fuse element.

2. The overvoltage protection device according to claim 1,
**characterized in that**
the short circuit device (5; 6) is configured as a mechanical short-circuiter having a fixed part (5) and a movable part (6), wherein a sacrificial element (4) is situated between the two parts (5; 6) which triggers or enables an irreversible relative motion of the parts (5; 6) once a predefined or predefinable I²t value is reached.

3. The overvoltage protection device according to claim 1 or 2,
**characterized in that**
a status indicator having a remote signaling function is provided.

4. The overvoltage protection device according to claim 3,
**characterized in that**
a mechanically released pin (22) forms the status indicator (8), wherein the pin (22) blocks the device from re-inserting into the NH fuse base (20) when released.

5. The overvoltage protection device according to any one of the preceding claims,
**characterized in that**
a parallel connection is provided in the common housing (1) which consists of a series connection of voltage-switching element (3), the sacrificial element (4) and the short circuit device (5; 6) in the first branch and at least one voltage-limiting element (7) in the second branch.

6. The overvoltage protection device according to claim 5,
**characterized in that**
the voltage-switching element is configured as a spark gap, gas discharger, semiconductor switch or diode, including one which is triggerable.

7. The overvoltage protection device according to claim 5 or 6,
**characterized in that**
the voltage-limiting element (7) is configured as a varistor and/or PTC element (8).

8. The overvoltage protection device according to any one of the preceding claims,
**characterized in that**
the sacrificial element (4) is configured as a metallic part having defined melting properties upon current load.

9. The overvoltage protection device according to any one of the preceding claims,
**characterized in that**
the sacrificial element (4) is fixed in temperature-sensitive manner and can be triggered independently of its melting integral upon a defined temperature being reached.

10. The overvoltage protection device according to any one of the preceding claims,
**characterized in that**
the operational and sensitivity range of the device can be set via an access opening (13) in the housing (1).

11. The overvoltage protection device according to claim 10,
**characterized in that**
the response voltage can be set by adjustable voltage dividers or bridges or by isolating provided switching elements or passivating or activating electronic components.

12. The overvoltage protection device according to claim 4,
**characterized in that**
the pin (22) is configured as a spring-preloaded firing pin, its movement enabled by the movable part (6; 24) upon a short circuit but otherwise blocked, wherein both the direction of movement as well as the distance travelled by the firing pin (22) can be selected independently of the direction and extent of movement of the movable part (6) of the short circuit device.

13. The overvoltage protection device according to claim 6,
**characterized in that**
using a power semiconductor as voltage-switching element (3) ensures targeted control of the device upon electrical or mechanical disruptions to the respective system (29; 30) to be protected.

14. The overvoltage protection device according to claim 2,
**characterized in that**
the short-circuiter with the sacrificial element (4) can be integrated into a spark gap as the overvoltage protection element employed.

15. The overvoltage protection device according to claim 14,
**characterized in that**
the spark gap comprises a triggering unit.

## Revendications

1. Dispositif de protection anti-surtension à fonction court-circuit destiné à protéger des installations et des personnes et prévu pour des installations à basse tension, dans lequel aussi bien au moins un élément de protection contre la surtension (3) qu'un moyen formant court-circuiteur (5 ; 6) à déclenchement thermique sont agencés dans un boîtier commun (1), **caractérisé en ce que**
le dispositif est réalisé pour le mettre en place dans une base à fusible HPC (20) et le boîtier commun (1) est réalisé de façon analogue dans l'espace à une cartouche à fusible HPC à lames de contact (2).

2. Dispositif de protection anti-surtension selon la revendication 1, **caractérisé en ce que** le moyen formant court-circuiteur (5 ; 6) est réalisé sous la forme d'un court-circuiteur mécanique comportant une partie fixe (5) et une partie mobile (6), et un élément sacrificiel (4) est situé entre les deux parties (5 ; 6), qui, lorsqu'une valeur I²t prédéfinie ou prédéfinissable est atteinte, déclenche ou libère un mouvement relatif irréversible des parties (5 ; 6).

3. Dispositif de protection anti-surtension selon la revendication 1 ou 2, **caractérisé en ce que**
il est prévu un affichage d'état à fonction de télécommunication.

4. Dispositif de protection anti-surtension selon la revendication 3,
**caractérisé en ce que**
un tenon (22) à déclenchement mécanique (22) forme l'affichage d'état, et dans l'état déclenché le tenon (22) bloque une remise en place du dispositif dans la base à fusible HPC (20).

5. Dispositif de protection anti-surtension selon l'une des revendications précédentes,
**caractérisé en ce que**
dans le boîtier commun (1), un circuit en parallèle est constitué par un circuit en série d'un élément de commutation de tension (3), de l'élément sacrificiel (4) et du moyen formant court-circuiteur (5 ; 6) dans la première branche, et par au moins un élément limiteur de tension (7) dans la seconde branche.

6. Dispositif de protection anti-surtension selon la revendication 5, **caractérisé en ce que**
l'élément de commutation de tension est réalisé sous la forme d'un éclateur, d'un parasurtenseur, d'un commutateur à semi-conducteur ou d'une diode, également déclenchable.

7. Dispositif de protection anti-surtension selon la revendication 5 ou 6, **caractérisé en ce que**
l'élément limiteur de tension (7) est réalisé sous la forme d'une varistance et/ou d'un élément à CTP (8).

8. Dispositif de protection anti-surtension selon l'une des revendications précédentes,
**caractérisé en ce que**
l'élément sacrificiel (4) est réalisé sous la forme d'une pièce métallique présentant un comportement de fusion défini sous l'application d'un courant.

9. Dispositif de protection anti-surtension selon l'une des revendications précédentes,
**caractérisé en ce que**
l'élément sacrificiel (4) est fixé de façon thermosensible et est déclenchable indépendamment de son intégrale de fusion lorsqu'une température prédéterminée est atteinte.

10. Dispositif de protection anti-surtension selon l'une des revendications précédentes,
**caractérisé en ce que**
la plage de travail et de sensibilité du dispositif est réglable via un accès d'ouverture (13) dans le boîtier (1).

11. Dispositif de protection anti-surtension selon la revendication 10, **caractérisé en ce que**
un réglage de la tension de réaction s'effectue par un diviseur de tension réglable, par des ponts ou par séparation d'éléments de commutation prédéterminés ou par passivation ou par activation de composants électroniques.

12. Dispositif de protection anti-surtension selon la revendication 4, **caractérisé en ce que**
le tenon (22) est réalisé sous la forme d'un percuteur précontraint par ressort dont le trajet de mouvement est libéré par la partie mobile (6 ; 24) en cas de court-circuit, sinon il est bloqué, et aussi bien la direction du trajet de mouvement que la longueur du trajet de mouvement du percuteur (22) peuvent être choisies indépendamment de la direction et de la longueur du trajet de mouvement de la partie mobile (6) du moyen formant court-circuiteur.

13. Dispositif de protection anti-surtension selon la revendication 6, **caractérisé en ce que**
lors de l'utilisation d'un semi-conducteur de puissance à titre d'élément commutateur de tension (3), il se produit un pilotage ciblé du dispositif en cas de perturbations électriques ou mécaniques de l'installation concernée à protéger (29 ; 30 ; M).

14. Dispositif de protection anti-surtension selon la revendication 2, **caractérisé en ce que**
le court-circuiteur avec l'élément sacrificiel (4) est intégré dans un éclateur à titre d'élément de protection contre la surtension mis en place.

15. Dispositif de protection anti-surtension selon la revendication 14 précédentes,
**caractérisé en ce que**
l'éclateur comprend une unité de déclenchement.
